# EUROPÄISCHE PATENTANMELDUNG

(11) **EP 2 230 214 A1**
(43) Veröffentlichungstag der Anmeldung: **22.09.2010**
(21) Anmeldenummer: 10000653.5
(22) Anmeldetag: 22.01.2010
(51) Int. Cl.: C03B 9/16, C03B 9/40

(54) **Invertmechanismus einer Glasmaschine**

(30) Priorität: 12.03.2009 DE 102009012930
(71) Anmelder: GPS GLASPRODUKTIONS-SERVICE GMBH, 45329 Essen (DE)
(72) Erfinder: Diekämper, Lars, 45721 Haltern am See (DE)
(74) Vertreter: Lelgemann, Karl-Heinz

(57) **Zusammenfassung**

Ein Invertmechanismus (1) einer Glasmaschine dient dazu, Külbel von einer Vorformseite der Glasmaschine zu einer Fertigformseite derselben zu überführen.

Der Invertmechanismus (1) hat einen Druckluftzylinderantrieb (3), mittels dessen Kolben ein Mündungsmechanismus (2) der Glasmaschine zur Überführung der Külbel verstellbar ist, und dessen Vorschubraum (19) und dessen Rückzugraum (27) über eine erste (16) bzw. eine zweite Ventileinrichtung (24) an eine Druckluftquelle (20, 28) anschließbar sind.

Zur genaueren Steuerung sowohl der Vorschub- als auch der Rückzugbewegung des Kolbens (6) des Druckluftzylinderantriebs (3) und damit des Invertmechanismus (1) beim Umsetzen der Külbel wird vorgeschlagen, dass die erste Ventileinrichtung (16), mittels der der Vorschubraum (19) des Druckluftzylinderantriebs (3) an die Druckluftquelle (20) anschließbar ist, als Proportionalventil (16) ausgebildet ist, dessen Durchflussquerschnitt mittels einer Steuereinheit (12) entsprechend dem Ergebnis eines auf die Kolbenbewegung im Druckluftzylinder (4) bezogenen Soll-Wert/Ist-Wert-Vergleichs regelbar ist.

## Beschreibung

Die vorliegende Erfindung bezieht sich auf einen Invertmechanismus einer Glasmaschine, mittels dem Külbel von einer Vorformseite der Glasmaschine zur einer Fertigformseite derselben überführbar sind, mit einem Druckluftzylinderantrieb, mittels dessen Kolben ein Mündungsmechanismus der Glasmaschine zur Überführung der Külbel verstellbar ist, und dessen Vorschubraum und dessen Rückzugraum über eine erste bzw. eine zweite Ventileinrichtung an eine Druckluftquelle anschließbar sind. Derartige Invertmechanismen, die pneumatisch mittels des Druckluftzylinderantriebs betätigt werden, sind bei aus dem Stand der Technik bekannten Glasmaschinen üblich.

Der Erfindung liegt die Aufgabe zugrunde, einen Invertmechanismus der vorstehend geschilderten Gattung derart weiterzubilden, dass bei Beibehaltung des pneumatischen Antriebsprinzips dauerhaft eine im Vergleich zum Stand der Technik zuverlässigere und exaktere Steuerung bzw. Regelung der Kolbenbewegung im Druckluftzylinderantrieb und damit der Schwenk- bzw. Umsetzbewegung des Invertmechanismus möglich ist.

Diese Aufgabe wird erfindungsgemäß dadurch gelöst, dass die erste Ventileinrichtung, mittels der der Vorschubraum des Druckluftzylinderantriebs an die Druckluftquelle anschließbar ist, als Proportionalventil ausgebildet ist, dessen Durchflussquerschnitt mittels einer Steuereinheit entsprechend dem Ergebnis eines auf die Kolbenbewegung im Druckluftzylinder bezogenen Soll-Wert/Ist-Wert-Vergleichs regelbar ist.

Da das die erste Ventileinrichtung ausbildende Proportionalventil sowohl bei der Druckluftbeaufschlagung des Vorschubraums als auch beim Austreten von Luft aus dem Vorschubraum, der mit der Druckluftbeaufschlagung des Rückzugraums einhergeht, hinsichtlich seines Durchflussquerschnitts stufenlos einstellbar ist, kann die Schwenkbewegung des Invertmechanismus bzw. die Vorschubbewegung des Kolbens des Druckluftzylinderantriebs und die Rückzugbewegung dieses Kolbens variabel eingestellt werden. So ist es beispielsweise möglich, dass je nach Anforderungsprofil an den Bewegungszyklus des Invertmechanismus variable bzw. konstante Geschwindigkeiten realisiert werden. Die Start-, End- und Haltepositionen des Kolbens und damit des Invertmechanismus sind frei wählbar. Hierdurch ergibt sich beispielsweise ein erheblicher Vorteil, wenn in demjenigen Bereich der Glasmaschine, in dem der Invertmechanismus angeordnet ist, bestimmte Bauteile bzw. Komponenten der Glasmaschine ausgetauscht werden müssen. Da der Invertmechanismus quasi in jeder beliebigen Position anhalt- und fixierbar ist, kann er je nach auszutauschender Komponente bzw. je nach auszutauschendem Bauteil so positioniert werden, dass die Zugänglichkeit der betreffenden Komponente bzw. des betreffenden Bauteils optimal ermöglicht wird. Aufgrund der erfindungsgemäß möglichen, an unterschiedlichste Anforderungsprofile anpassbaren Steuerung bzw. Regelung der Vorschub- und Rückzuggeschwindigkeit des Kolbens ist es möglich, für jeden Zyklusabschnitt die optimale Geschwindigkeit einzustellen. Aufgrund der erfindungsgemäß möglichen Optimierung der Kolbengeschwindigkeit in allen Zyklusabschnitten lassen sich sowohl die Vorschub- als auch die Rückzugzeit des Kolbens minimieren. Irgendwelche Veränderungen an den eigentlichen Druckluftzylinderantrieben der Glasmaschine sind nicht erforderlich, da die an den Druckluftzylindern vorhandenen pneumatischen Anschlusselemente weiter verwendet werden können.

Gemäß einer vorteilhaften Ausführungsform des erfindungsgemäßen Invertmechanismus ist die zweite Ventileinrichtung, mittels der der Rückzugraum des Druckluftzylinderantriebs an die Druckluftquelle anschließbar ist, als Drei/Zwei-Wegeventil ausgebildet. Die Steuerung bzw. Regelung der Vorschubbewegung des Kolbens erfolgt dann durch die mittels der Steuereinheit vorgenommene Einstellung des Durchflussquerschnitts des die erste Ventileinrichtung ausbildenden Proportionalventils in dessen Beaufschlagungsposition, in der der Vorschubraum des Druckluftzylinderantriebs an die diesem Proportionalventil zugeordnete Druckluftquelle angeschlossen ist. Die Steuerung bzw. Regelung der Rückzugbewegung des Kolbens erfolgt mittels der Steuereinheit ebenfalls in Verbindung mit dem vorstehend erwähnten ersten Proportionalventil, welches in seiner den Vorschubraum des Druckluftzylinderantriebs mit einer Dämpfungseinrichtung verbindenden Entspannungsposition hinsichtlich seines Durchflussquerschnitts mittels der Steuereinheit stufenlos einstellbar ist.

Wenn gemäß einer weiteren vorteilhaften Ausführungsform des erfindungsgemäßen Invertmechanismus die zweite Ventileinrichtung, mittels der der Rückzugraum des Druckluftzylinderantriebs an die Druckluftquelle anschließbar ist, als Proportionalventil ausgebildet ist, dessen Durchflussquerschnitt mittels der Steuereinheit entsprechend dem Ergebnis des auf die Kolbenbewegung im Druckluftzylinder bezogenen Soll-Wert/IstWert-Vergleichs steuerbar ist, kann auch der Durchflussquerschnitt der zweiten Ventileinrichtung mittels der Steuereinheit sowohl in der Beaufschlagungsposition des zweiten Proportionalventils als auch in der Entspannungsposition des zweiten Proportionalventils quasi stufenlos eingestellt werden. Hierdurch lässt sich die Qualität der Steuerung bzw. der Regelung des Betriebs des Druckluftzylinderantriebs sowie des nachgeschalteten Mündungsmechanismus erheblich verfeinern.

Gemäß einer vorteilhaften konstruktiv-technischen Weiterbildung der Erfindung können die erste und die zweite Ventileinrichtung in Form einer einzigen Ventilbaueinheit ausgestaltet und an eine ihnen gemeinsame Druckluftquelle angeschlossen sein.

Des Weiteren ist es zweckmäßigerweise möglich, das erste Proportionalventil und die als Drei/Zwei-Wegeventil oder als zweites Proportionalventil ausgebildete zweite Ventileinrichtung an eine Dämpfungseinrichtung anzuschließen, mittels der ein den Druckluftzylinderantrieb verlassender Druckluftstrom dämpfbar ist.

Um in einfacher Weise die Ist-Werte zu erzeugen, die für die vorstehend erläuterte Steuerung bzw. Regelung des Betriebs des Invertmechanismus erforderlich sind, ist es vorteilhaft, wenn einer Kolbenstange des Druckluftzylinderantriebs ein Wegsensor zugeordnet ist, mittels dem die aktuelle Position des Kolbens und damit des Mündungsmechanismus der Glasmaschine erfassbar und der an eine Signalauswerteeinheit angeschlossen ist, mittels der die Wegsensorsignale in Positions-, Geschwindigkeits-, und/oder Beschleunigungsdaten bzw. Ist-Werte der Kolbenbewegung im Druckluftzylinder umwandelbar sind.

Entsprechend kann gemäß einer weiteren vorteilhaften Ausgestaltung des erfindungsgemäßen Invertmechanismus eine Vergleichseinheit vorgesehen sein, an die die Signalauswerteeinheit des Wegsensors und eine Eingabe-/Ausgabeeinheit, mittels der Soll-Werte für die Kolbenbewegung im Druckluftzylinder in die Vergleichseinheit eingebbar sind, angeschlossen sind, und mittels der die Ist-Werte mit den Soll-Werten für die Kolbenbewegung im Druckluftzylinder vergleichbar und ein einer Abweichung der Ist-Werte von den Soll-Werten entsprechendes Signal an die Steuereinheit anlegbar ist.

Um in einfacher Weise die Entscheidung zu treffen, ob sich der Kolben des Druckluftzylinderantriebs im Vorschub- oder im Rückzugbetrieb befindet, ist ein Signalgeber zweckmäßig, mittels dem im Zusammenwirken mit dem Wegsensor ein den Vorschubbetrieb bzw. den Rückzugbetrieb des Kolbens anzeigendes Signal an die Steuereinheit anlegbar ist.

Bei der vorstehend geschilderten Ausgestaltung des erfindungsgemäßen Invertmechanismus erfolgt eine Drucküberwachung innerhalb des Druckluftzylinderantriebs durch die Erfassung der Kolbenbewegung mittels des Wegsensors, die in der Signalauswerteeinheit des Wegsensors verarbeitet wird. Eine schnelle Kolbenbewegung impliziert hierbei einen hohen Druck, wohingegen eine langsame Kolbenbewegung einen vergleichsweise geringen Druck impliziert. Durch die beiden Ventileinrichtungen und den Wegsensor ist eine vollständige Kontrolle der Kolbenbewegung möglich, wobei auf dieser Grundlage eine elektronische Geschwindigkeitskontrolle und -regelung realisierbar ist.

Zum einen ergibt sich im Falle des erfindungsgemäßen Invertmechanismus eine erhebliche Reduzierung hinsichtlich des Verschleisses der Bauteile desselben, wobei darüber hinaus eine erhöhte Reproduzierbarkeit der Kolbenbewegung möglich ist, was Auswirkungen für die Qualität der in der Glasmaschine hergestellten Glasartikel hat.

Da mittels des Wegsensors und des einen Vorschub- bzw. Rückzugbetrieb anzeigenden Signalgebers die jeweilige Position des Kolbens im Vergleich zum Stand der Technik wesentlich präziser ermittelt werden kann, kann die Schwenkbewegung des Invertmechanismus erheblich genauer durchgeführt werden.

Zusammenfassend lässt sich feststellen, dass die gesamte Durchführung und Überwachung des Betriebs des Invertmechanismus verbessert werden kann.

Bei einem erfindungsgemäßen Verfahren zur Steuerung der Vorschub- und Rückzugbewegung eines Druckluftzylinderantriebs eines Invertmechanismus einer Glasmaschine werden ein Vorschubraum und ein Rückzugraum des Druckluftzylinderantriebs an eine Druckluftquelle angeschlossen, wobei zumindest der von der dem Vorschubraum des Druckluftzylinderantriebs zugeordneten Druckluftquelle zum Vorschubraum gerichtete Druckluftstrom entsprechend dem Ergebnis eines auf die Kolbenbewegung im Druckluftzylinder bezogenen Soll-Wert/Ist-Wert-Vergleichs stufenlos regelbar ist.

Vorteilhaft wird hierbei zur stufenlosen Regelung des zum Vorschubraum gerichteten Druckluftstroms ein Proportionalventil eingesetzt.

Gemäß einer vorteilhaften Ausführungsform des erfindungsgemäßen Verfahrens wird zur stufenlosen Regelung des zum Rückzugraum des Druckluftzylinderantriebs gerichteten Druckluftstroms ebenfalls ein Proportionalventil eingesetzt. Sofern eines oder beide der im erfindungsgemäßen Verfahren eingesetzten Proportionalventile auch in seiner Entspannungsposition hinsichtlich seines Öffnungsquerschnitts beliebig einstellbar ist, kann auch der den Vorschubraum bzw. den Rückzugraum verlassende Druckluftstrom stufenlos geregelt werden.

Im Folgenden wird die Erfindung anhand von Ausführungsformen unter Bezugnahme auf die Zeichnung näher erläutert.

Es zeigen:
- Figur 1: eine erste Ausführungsform für die Erfindung wesentlicher Bestandteile eines erfindungsgemäßen Invertmechanismus einer Glasmaschine;
- Figur 2: eine zweite Ausführungsform für die Erfindung wesentlicher Bestandteile des erfindungsgemäßen Invertmechanismus einer Glasmaschine; und
- Figur 3: eine dritte Ausführungsform für die Erfindung wesentlicher Bestandteile des erfindungsgemäßen Invertmechanismus einer Glasmaschine.

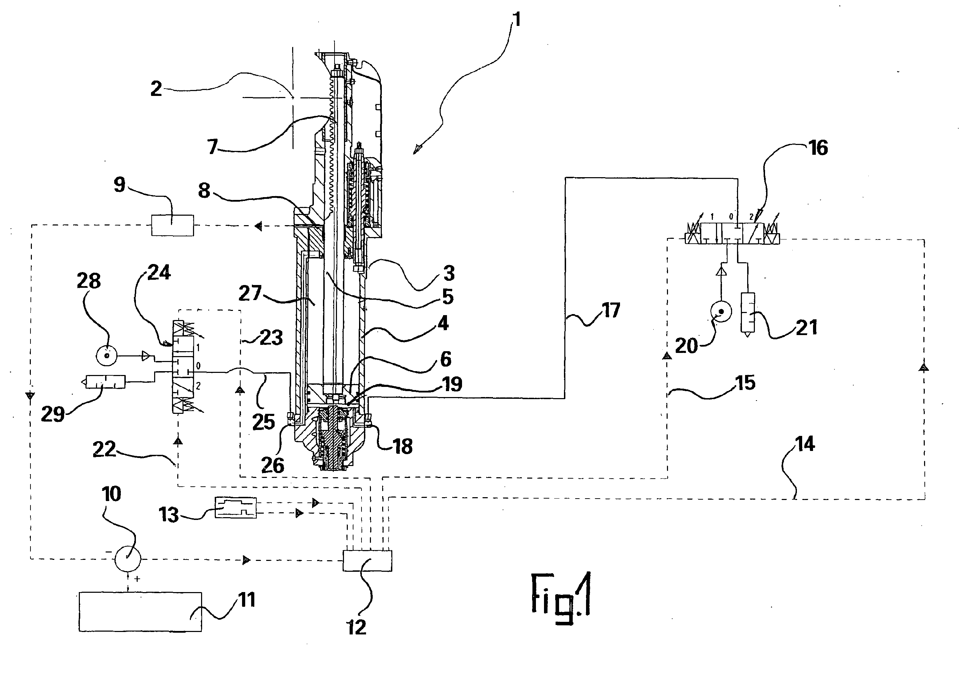

Ein anhand der in den Figuren 1 bis 3 gezeigten Ausführungsformen erläuterter erfindungsgemäßer Invertmechanismus 1 einer im übrigen in den Figuren nicht gezeigten Glasmaschine dient dazu, Külbel, die in den Vorformen an der Vorformseite der Glasmaschine hergestellt worden sind, von der Vorformseite der Glasmaschine zu deren Fertigformseite umzusetzen bzw. zu überführen.

Hierzu wird ein in den Figuren 1 bis 3 lediglich angedeuteter Mündungsmechanismus 2, der die Külbel fixiert, verstellt, wobei bei dieser Verstellung die Külbel von der Vorformseite auf die Fertigformseite der Glasmaschine umgesetzt werden.

Als Antriebselement für den Mündungsmechanismus 2 dient ein in den Figuren 1 bis 3 gezeigter Druckluftzylinderantrieb 3 des Invertmechanismus 1. Der Druckluftzylinderantrieb 3 hat einen Druckluftzylinder 4, in dem ein mit einer Kolbenstange 5 verbundener Kolben 6 in auf- und abwärtiger Richtung bewegbar ist.

An ihrem aus dem Druckluftzylinder 4 vorstehenden Endabschnitt ist die Kolbenstange 5 mit einem Zahnabschnitt bzw. einer Zahnstange 7 versehen, mittels der sie in Antriebsverbindung mit dem in der Figur lediglich angedeuteten Mündungsmechanismus 2 steht.

In den dargestellten Ausführungsformen ist im oberen Bereich des Druckluftzylinders 4 ein Wegsensor 8 vorgesehen, mittels dem die Bewegung der Kolbenstange 5 und damit des Kolbens 6 innerhalb des Druckluftzylinders 4 des Druckluftzylinderantriebs 3 kontinuierlich erfassbar ist. Der Wegsensor 8 ist an eine Signalauswerteeinheit 9 angeschlossen, in der die Wegsensorsignale in auf die Kolbenbewegung im Druckluftzylinder 4 bezogene Positions-, Geschwindigkeits- und/oder Beschleunigungsdaten umwandelbar sind. Bei den seitens der Signalauswerteeinheit 9 erzeugten und ausgegebenen Daten handelt es sich um die Ist-Werte für die Steuerung bzw. Regelung des Betriebs des Druckluftzylinderantriebs 3 des Invertmechanismus 1.

Von der Signalauswerteeinheit 9 werden die vorstehend erwähnten Ist-Werte an eine Vergleichseinheit 10 weitergeleitet, die außerdem mit einer Eingabe-/Ausgabeeinheit 11 verbunden ist, mittels der Soll-Werte für die Position, die Geschwindigkeit und/oder die Beschleunigung der Kolbenbewegung im Druckluftzylinder 4 zur Vergleichseinheit 10 leitbar sind. In der Vergleichseinheit 10 werden die Ist-Werte mit den Soll-Werten verglichen; eine Abweichung der Ist-Werte von den Soll-Werten wird von der Vergleichseinheit 10 an eine Steuereinheit 12 weitergeleitet. Die Steuereinheit 12 ist außerdem an einen Signalgeber 13 angeschlossen, der der Steuereinheit 12 anzeigt, ob sich der Druckluftzylinderantrieb 3 im Vorschubbetrieb, in dem sich der Kolben 6 in aufwärtiger Richtung bewegt, oder im Rückzugbetrieb befindet, in dem sich der Kolben 6 in abwärtiger Richtung bewegt. Hierzu können ergänzend entsprechende Signale, die vom Wegsensor 8 erfasst werden, berücksichtigt werden.

Die Steuereinheit 12 ist über entsprechende Steuerleitungen 14, 15 an ein erstes Proportionalventil 16 angeschlossen. Das erste Proportionalventil 16 ist seinerseits über eine Druckluftleitung 17 und am Druckluftzylinder 4 vorgesehene Anschlusselemente 18 mit dem Vorschubraum 19 des Druckluftzylinderantriebs 3 verbunden, der bei den in den Figuren 1 bis 3 gezeigten Ausführungsformen stets unterhalb des Kolbens 6 des Druckluftzylinderantriebs 3 angeordnet ist.

Das erste Proportionalventil 16 hat eine Sperrstellung "0", eine Beaufschlagungsposition "2" und eine Entspannungsposition "1".

In der Sperrstellung "0" besteht keine Verbindung zwischen der Druckluftleitung 17 und einer in Bezug auf die Druckluftleitung 17 auf der anderen Seite des ersten Proportionalventils 16 angeordneten Druckluftquelle 20 bzw. einer ebenfalls auf dieser Seite des ersten Proportionalventils 16 angeordneten Dämpfungseinrichtung 21.

In der Beaufschlagungsposition "2" steht die Druckluftquelle 20 über das erste Proportionalventil 16 in Verbindung mit der Druckluftleitung 17 und damit dem Vorschubraum 19 des Druckluftzylinderantriebs 3. Der Durchfluss durch das erste Proportionalventil 16 ist mittels der Steuereinheit 12 stufenlos einstellbar.

In der Entspannungsposition "1" schaltet das erste Proportionalventil 16 eine Verbindung zwischen der Druckluftleitung 17 und damit dem Vorschubraum 19 des Druckluftzylinderantriebs 3 mit der Dämpfungseinrichtung 21. Die im Vorschubraum 19 vorhandene Luft kann somit zur Dämpfungseinrichtung 21 abströmen, wobei auch in diesem Zustand des ersten Proportionalventils 16 der Durchfluss mittels der Steuereinheit 12 stufenlos geregelt werden kann.

Des Weiteren ist die Steuereinheit 12 über Steuerleitungen 22, 23 an ein zweites Proportionalventil 24 angeschlossen. Das zweite Proportionalventil 24 ist seinerseits über eine Druckluftleitung 25 und am Druckluftzylinder 4 vorgesehene Anschlusselemente 26 mit dem Rückzugraum 27 des Druckluftzylinderantriebs 3 verbunden, der bei den in den Figuren 1 bis 3 gezeigten Ausführungsformen stets oberhalb des Kolbens 6 des Druckluftzylinderantriebs 3 angeordnet ist.

Das zweite Proportionalventil 24 hat eine Sperrstellung "0", eine Beaufschlagungsposition "2" und eine Entspannungsposition "1".

In der Sperrstellung "0" besteht keine Verbindung zwischen der Druckluftleitung 25 und einer in Bezug auf die Druckluftleitung 25 auf der anderen Seite des zweiten Proportionalventils 24 angeordneten Druckluftquelle 28 bzw. einer ebenfalls auf dieser Seite des zweiten Proportionalventils 24 angeordneten Dämpfungseinrichtung 29.

In der Beaufschlagungsposition "2" steht die Druckluftquelle 28 über das zweite Proportionalventil 24 in Verbindung mit der Druckluftleitung 25 und damit dem Rückzugraum 27 des Druckluftzylinderantriebs 3. Der Durchfluss durch das zweite Proportionalventil 24 ist mittels der Steuereinheit 12 stufenlos einstellbar.

In der Entspannungsposition "1" schaltet das zweite Proportionalventil 24 eine Verbindung zwischen der Druckluftleitung 25 und damit dem Rückzugraum 27 des Druckluftzylinderantriebs 3 mit der Dämpfungseinrichtung 29. Die im Rückzugraum 27 vorhandene Luft kann somit zur Dämpfungseinrichtung 29 abströmen, wobei auch in diesem Zustand des zweiten Proportionalventils 24 der Durchfluss mittels der Steuereinheit 12 stufenlos geregelt werden kann.

Im Betrieb des vorstehend geschilderten Invertmechanismus 1 wird in dem Augenblick, wenn der Külbel mittels des Invertmechanismus 1 von der Vorformseite auf die Fertigformseite der Glasmaschine umgesetzt werden soll, seitens der Steuereinheit 12, die mit dem Signalgeber 13 zusammenwirkt, über die Steuerleitungen 14, 15 bzw. 22, 23 ein Signal an das erste 16 bzw. das zweite Proportionalventil 24 weitergeleitet.

Das erste Proportionalventil 16 schaltet aus der Sperrstellung "0" in die Beaufschlagungsposition "2". Die dem ersten Proportionalventil 16 zugeordnete Druckluftquelle 20 ist dann mit dem Vorschubraum 19 des Druckluftzylinderantriebs 3 verbunden. Das zweite Proportionalventil 24 schaltet von der Sperrstellung "0" in die Entspannungsposition "1". Der Rückzugraum 27 des Druckluftzylinderantriebs 3 ist dann mit der Dämpfungseinrichtung 29 verbunden.

Mittels der dem ersten Proportionalventil 16 zugeordneten Druckluftquelle 20 wird im Zusammenwirken mit dem hinsichtlich seines Durchflusses gesteuerten ersten Proportionalventil 16 ein geregelter Druck aufgebaut, mittels dem der Kolben 6 des Druckluftzylinderantriebs 3 in in den Figuren 1 bis 3 aufwärtiger Richtung verstellt wird. Durch die mit dem Kolben 6 fest verbundene Kolbenstange 5 wird die Kolbenbewegung auf die an der Kolbenstange 5 vorgesehene Zahnstange 7 übertragen, durch die der in den Figuren lediglich angedeutete Mündungsmechanismus 2 betätigt wird.

Aufgrund der möglichen Regelung des Durchflusses durch das sich in seiner Beaufschlagungsposition "2" befindliche erste Proportionalventil 16 mittels der Steuereinheit 12 können unterschiedliche Zyklen bei der Druckbeaufschlagung des Vorschubraums 19 gefahren werden, d.h., die Kolbenbewegung innerhalb des Druckluftzylinders 4 des Druckluftzylinderantriebs 3 kann quasi beliebig variiert werden.

Auf die Kolbenbewegung bezogene Daten werden mittels des im Druckluftzylinder 4 an der Kolbenstange 5 vorgesehenen Wegsensors 8 erfasst. Diese Daten werden vom Wegsensor 8 zur Signalauswerteeinheit 9 weitergeleitet.

In der Vergleichseinheit 10 werden die aus der Signalauswerteeinheit 9 stammenden Ist-Werte der Kolbenbewegung mit von der Eingabe-/Ausgabeeinheit 11 an die Vergleichseinheit 10 übermittelten Soll-Werten der Kolbenbewegung verglichen. Das Ergebnis dieses Vergleichs wird in Form von Korrektursignalen an die Steuereinheit 12 weitergegeben; diese regelt über entsprechende Signale die Positionierung der Proportionalventile 16, 24, wodurch die Ist-Werte der Kolbenbewegung an die Soll-Werte derselben angepasst werden. Beispielsweise kann in jedem Bewegungsabschnitt der aufwärts gerichteten Vorschubbewegung des Kolbens 6 die gewünschte Bewegungsgeschwindigkeit eingestellt werden.

Wenn der Kolben 6 des Druckluftzylinderantriebs 3 seine in den Figuren höchste Position erreicht, wird seitens des Signalgebers 13 im Zusammenwirken mit dem Wegsensor 8 das Signal für das Zurückschwenken des Invertmechanismus 1 zur Vorformseite der Glasmaschine an die Steuereinheit 12 gegeben.

Die Steuereinheit 12 gibt über die Steuerleitungen 14, 15 bzw. 22, 23 entsprechende Steuersignale an das erste 16 bzw. das zweite Proportionalventil 24. Das erste Proportionalventil 16 schaltet aus der Beaufschlagungsposition "2" in die Entspannungsposition "1". Hierdurch wird der Vorschubraum 19 des Druckluftzylinderantriebs 3 mit der Dämpfungseinrichtung 21 verbunden. Die Luft aus dem Vorschubraum 19 kann entweichen. Des Weiteren schaltet das zweite Proportionalventil 24 aus der Entspannungsposition "1" in die Beaufschlagungsposition "2". Hierdurch wird die dem zweiten Proportionalventil 24 zugeordnete Druckluftquelle 28 mit dem Rückzugraum 27 des Druckluftzylinderantriebs 3 verbunden.

Die dem zweiten Proportionalventil 24 zugeordnete Druckluftquelle 28 kann im Vergleich zur dem ersten Proportionalventil 16 zugeordneten Druckluftquelle 20 einen unterschiedlichen Druck aufweisen, was im Vergleich zur Vorschubgeschwindigkeit des Kolbens 6 eine unterschiedliche Rückzuggeschwindigkeit desselben zur Folge haben kann.

Auch die Rückzuggeschwindigkeit des Kolbens 6 kann mittels der beiden, durch die Steuereinheit 12 hinsichtlich ihres Durchflussquerschnitts stufenlos steuer- bzw. regelbaren Proportionalventile 16, 24 während des Rückzugzyklus des Kolbens beliebig eingestellt werden. Hierdurch kann auch die Rückzugbewegung des Kolbens quasi beliebig und stufenlos ausgestaltet werden.

Nach Erreichen der in den Figuren 1 bis 3 jeweils gezeigten Ausgangsposition des Kolbens 6 des Druckluftzylinderantriebs 3 beginnt der vorstehend geschilderte Arbeitsablauf erneut.

Bei dem vorstehend geschilderten Invertmechanismus 1 ist wegen der zwei vorhandenen, mittels der Steuereinheit 12 steuer- bzw. regelbaren Proportionalventile 16, 24 eine exakte Regelung beim Zuführen bzw. Abführen der Druckluft möglich, wodurch in entsprechender Weise die Umsetzbewegung des Invertmechanismus 1 sowohl bei der Vorschubbewegung des Kolbens 6 als auch bei der Rückzugbewegung des Kolbens 6 exakt geregelt werden kann.

Des Weiteren ist es möglich, den Kolben 6 und damit den Invertmechanismus 1 quasi in jeder beliebigen Position zwischen der obersten und untersten Kolbenstellung anzuhalten, wozu lediglich eine entsprechende Einstellung der beiden Proportionalventile 16, 24 mittels der Steuereinheit 12 erforderlich ist. Falls der Kolben 6 innerhalb des Druckluftzylinders 4 in unerwünschter Weise sich zu bewegen beginnt bzw. wegrutscht, wird dies durch den Wegsensor 8 ermittelt und kann durch entsprechende Einstellsignale, die von der Steuereinheit 12 an die beiden Proportionalventile 16, 24 weitergeleitet werden, ausgeglichen werden. Die quasi in jeder denkbaren Stellung des Invertmechanismus 1 gegebene Anhaltemöglichkeit bietet erhebliche Erleichterungen beim Austausch von Komponenten der Glasmaschine unter den üblicherweise im Bereich des Invertmechanismus 1 sehr beschränkten räumlichen Verhältnissen.

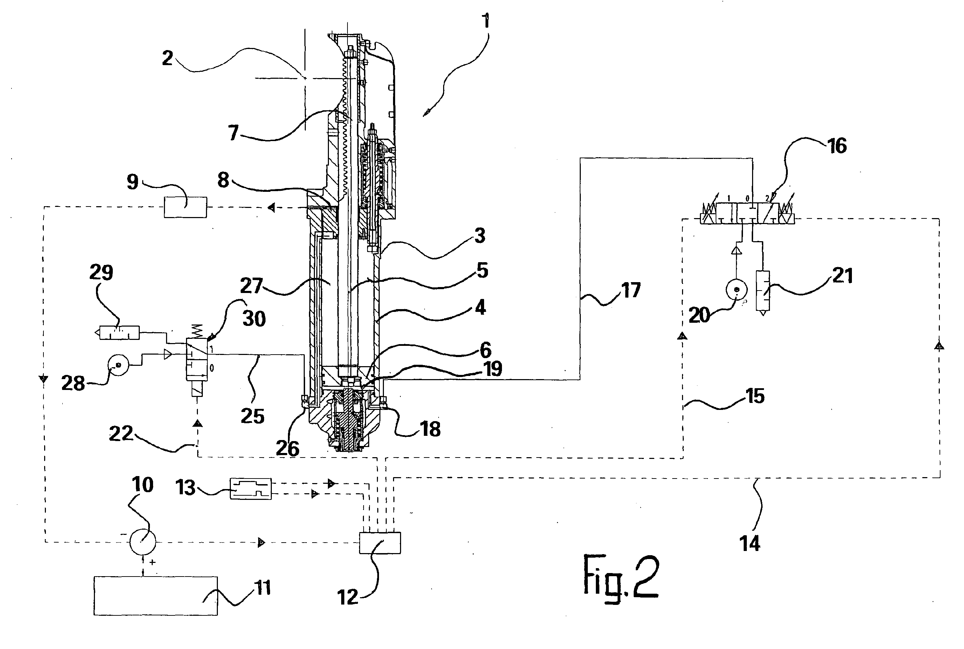

Bei dem in Figur 2 gezeigten Ausführungsbeispiel des erfindungsgemäßen Invertmechanismus 1 ist anstelle des zweiten Proportionalventils 24, wie es bei der in Figur 1 gezeigten Ausführungsform vorhanden ist, ein Drei/Zwei-Wegeventil 30 vorgesehen.

Bei der Vorschubbewegung des Kolbens 6 kann daher der Strom der aus dem Rückzugraum 27 des Druckluftzylinderantriebs 3 abströmenden Luft durch die Druckluftleitung 25 nicht geregelt werden. Eine Steuerung bzw. Regelung bei der Vorschubbewegung des Kolbens 6 ist somit lediglich mittels des ersten Proportionalventils 16, dessen Durchflussquerschnitt mittels der Steuereinheit 12 verstellbar ist, möglich.

Bei der Rückzugbewegung des Kolbens 6 kann der Strom der durch die Druckluftleitung 25 in den Rückzugraum 27 eintretenden Druckluft nicht geregelt werden. Die Rückzugbewegung des Kolbens 6 lässt sich bei der in Figur 2 gezeigten Ausführungsform nur dadurch regeln, dass der Durchflussquerschnitt des ersten Proportionalventils 16, das sich in seiner Entspannungsposition "1" befindet, mittels der Steuereinheit 12 geregelt werden kann.

Zur Vorschubbewegung des Kolbens 6 schaltet das erste Proportionalventil 16 aus der Sperrstellung "0" in die Beaufschlagungsposition "2". Der Vorschubraum 19 des Druckluftzylinderantriebs 3 ist mit der dem ersten Proportionalventil 16 zugeordneten Druckluftquelle 20 verbunden. Das Drei/ZweiWegeventil 30 schaltet in seine Entspannungsposition "1", wodurch der Rückzugraum 27 des Druckluftzylinderantriebs 3 mit der dem Drei/Zwei-Wegeventil 30 zugeordneten Dämpfungseinrichtung 29 verbunden wird.

Zur Rückzugbewegung des Kolbens 6 wird das erste Proportionalventil 16 in dessen Entspannungsposition "1" geschaltet. Hierdurch wird der Vorschubraum 19 des Druckluftzylinderantriebs 3 mit der dem ersten Proportionalventil 16 zugeordneten Dämpfungseinrichtung 21 verbunden. Das Drei/ZweiWegeventil 30 wird in seine Beaufschlagungsposition "0" verbracht. Hierdurch wird die dem Drei/Zwei-Wegeventil 30 zugeordnete Druckluftquelle 28 mit dem Rückzugraum 27 des Druckluftzylinderantriebs 3 verbunden.

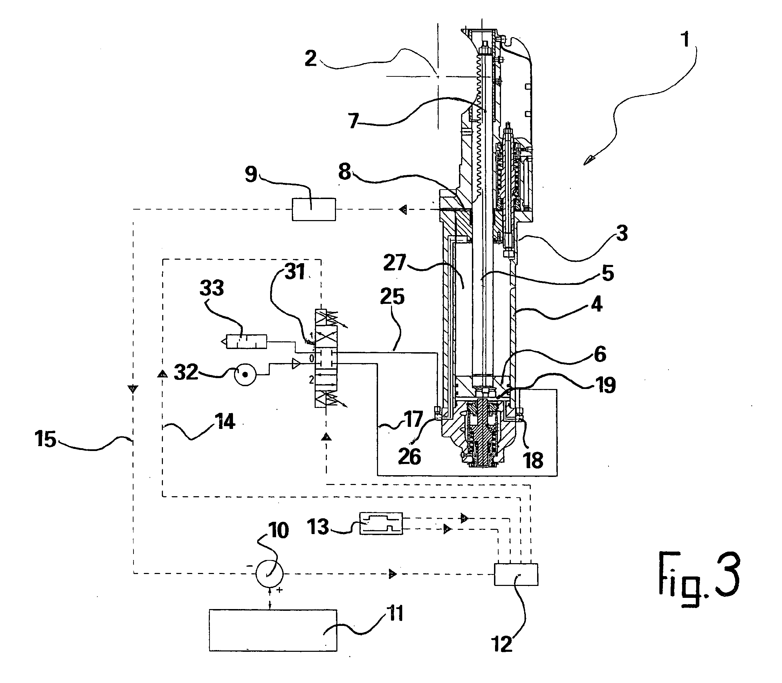

In Figur 3 ist eine Ausführungsform des erfindungsgemäßen Invertmechanismus 1 beschrieben, bei der das erste Proportionalventil 16 und das zweite Proportionalventil 24 in Form einer einzigen Ventilbaueinheit 31 ausgestaltet sind. Der Ventilbaueinheit 31 ist eine beiden durch sie verwirklichten Proportionalventilen gemeinsame Druckluftquelle 32 und eine beiden durch die Ventilbaueinheit 31 verwirklichten Proportionalventilen gemeinsame Dämpfungseinrichtung 33 zugeordnet. Die Arbeitsweise der Ausführungsform gemäß Figur 3 entspricht im Wesentlichen der anhand Figur 1 geschilderten Ausführungsform.

Schaltet die Ventilbaueinheit 31 aufgrund entsprechender Signale der Steuereinheit 12 in die Position "2", ist eine Verbindung zwischen der der Ventilbaueinheit 31 zugeordneten Druckluftquelle 32 mit dem Vorschubraum 19 des Druckluftzylinderantriebs 3 hergestellt. Außerdem ist der Rückzugraum 27 des Druckluftzylinderantriebs 3 mit der der Ventilbaueinheit 31 zugeordneten Dämpfungseinrichtung 33 verbunden. Hierdurch wird der Kolben 6 des Druckluftzylinderantriebs 3 ausgefahren, d.h., er bewegt sich in den Figuren 1 bis 3 in aufwärtiger Richtung.

Wenn die Ventilbaueinheit 31 mittels der Steuereinheit 12 in die Position "1" geschaltet wird, wird der Vorschubraum 19 des Druckluftzylinderantriebs 3 mit der der Ventilbaueinheit 31 zugeordneten Dämpfungseinrichtung 33 verbunden, wohingegen der Rückzugraum 27 des Druckluftzylinderantriebs 3 mit der der Ventilbaueinheit 31 zugeordneten Druckluftquelle 32 verbunden wird. Der Kolben 6 des Druckluftzylinderantriebs 3 wird eingefahren.

## Patentansprüche

1. Invertmechanismus einer Glasmaschine, mittels dem Külbel von einer Vorformseite der Glasmaschine zu einer Fertigformseite derselben überführbar sind, mit einem Druckluftzylinderantrieb (3), mittels dessen Kolben (6) ein Mündungsmechanismus (2) der Glasmaschine zur Überführung der Külbel verstellbar ist, und dessen Vorschubraum (19) und dessen Rückzugraum (27) über eine erste (16) bzw. eine zweite Ventileinrichtung (24; 30) an eine Druckluftquelle (20, 28) anschließbar sind, **dadurch gekennzeichnet, dass** die erste Ventileinrichtung (16), mittels der der Vorschubraum (19) des Druckluftzylinderantriebs (3) an die Druckluftquelle (20) anschließbar ist, als Proportionalventil (16) ausgebildet ist, dessen Durchflussquerschnitt mittels einer Steuereinheit (12) entsprechend dem Ergebnis eines auf die Kolbenbewegung im Druckluftzylinder (4) bezogenen Soll-Wert/Ist-Wert-Vergleichs regelbar ist.

2. Invertmechanismus nach Anspruch 1, bei dem die zweite Ventileinrichtung (30), mittels der der Rückzugraum (27) des Druckluftzylinderantriebs (3) an die Druckluftquelle (28) anschließbar ist, als Drei/Zwei-Wegeventil (30) ausgebildet ist.

3. Invertmechanismus nach Anspruch 1, bei dem die zweite Ventileinrichtung (24), mittels der der Rückzugraum (27) des Druckluftzylinderantriebs (3) an die Druckluftquelle (28) anschließbar ist, als Proportionalventil (24) ausgebildet ist, dessen Durchflussquerschnitt mittels der Steuereinheit (12) entsprechend dem Ergebnis des auf die Kolbenbewegung im Druckluftzylinder (4) bezogenen Soll-Wert/Ist-Wert-Vergleichs steuerbar ist.

4. Invertmechanismus nach einem der Ansprüche 1 bis 3, bei dem die erste und die zweite Ventileinrichtung in Form einer einzigen Ventilbaueinheit (31) ausgestaltet und an eine ihnen gemeinsame Druckluftquelle (32) angeschlossen sind.

5. Invertmechanismus nach einem der Ansprüche 1 bis 4, bei dem das erste Proportionalventil (16) und die als Drei/ZweiWegeventil (30) oder als zweites Proportionalventil (24) ausgebildete zweite Ventileinrichtung an eine Dämpfungseinrichtung (21, 29, 33) anschließbar sind, mittels der ein den Druckluftzylinderantrieb (3) verlassender Druckluftstrom dämpfbar ist.

6. Invertmechanismus nach einem der Ansprüche 1 bis 5, bei dem einer Kolbenstange (5) des Druckluftzylinderantriebs (3) ein Wegsensor (8) zugeordnet ist, mittels dem die aktuelle Position des Kolbens (6) und damit des Mündungsmechanismus (2) der Glasmaschine erfassbar und der an eine Signalauswerteeinheit (9) angeschlossen ist, mittels der die Wegsensorsignale in Positions-, Geschwindigkeits- und/oder Beschleunigungsdaten bzw. Ist-Werte der Kolbenbewegung im Druckluftzylinder (4) umwandelbar sind.

7. Invertmechanismus nach Anspruch 6, mit einer Vergleichseinheit (10), an die die Signalauswerteeinheit (9) des Wegsensors (8) und eine Eingabe-/Ausgabeeinheit (11), mittels der Soll-Werte für die Kolbenbewegung im Druckluftzylinder (4) in die Vergleichseinheit (10) eingebbar sind, angeschlossen sind, und mittels der die Ist-Werte mit den Soll-Werten für die Kolbenbewegung im Druckluftzylinder (4) vergleichbar und ein eine Abweichung der Ist-Werte von den Soll-Werten entsprechendes Signal an die Steuereinheit (12) anlegbar ist.

8. Invertmechanismus nach Anspruch 6 oder 7, mit einem Signalgeber (13), mittels dem im Zusammenwirken mit dem Wegsensor (8) ein den Vorschubbetrieb bzw. den Rückzugbetrieb des Kolbens (6) anzeigendes Signal an die Steuereinheit (12) anlegbar ist.

9. Verfahren zur Steuerung der Vorschub- und Rückzugbewegung eines Druckluftzylinderantriebs (3) eines Invertmechanismus (1) einer Glasmaschine, bei dem ein Vorschubraum (19) und ein Rückzugraum (27) des Druckluftzylinderantriebs (3) an eine Druckluftquelle (20, 28, 32) angeschlossen werden, **dadurch gekennzeichnet, dass** zumindest der von der dem Vorschubraum (19) des Druckluftzylinderantriebs (3) zugeordneten Druckluftquelle (20) zum Vorschubraum (19) gerichtete Druckluftstrom entsprechend dem Ergebnis eines auf die Kolbenbewegung im Druckluftzylinder (4) bezogenen Soll-Wert/Ist-Wert-Vergleichs stufenlos regelbar ist.

10. Verfahren nach Anspruch 9, bei dem zur stufenlosen Regelung des zum Vorschubraum (19) gerichteten Druckluftstroms ein Proportionalventil 16 eingesetzt wird.

11. Verfahren nach Anspruch 9 oder 10, bei dem zur stufenlosen Regelung des zum Rückzugraum (27) des Druckluftzylinderantriebs (3) gerichteten Druckluftstroms ein Proportionalventil (24) eingesetzt wird.
